# EUROPEAN PATENT APPLICATION

(11) **EP 2 854 266 A1**
(43) Date of publication of application: **01.04.2015**
(21) Application number: 13186272.4
(22) Date of filing: 27.09.2013
(51) Int. Cl.: H02K 35/02, H02K 7/18

(54) **Electric linear generator/motor**

(71) Applicant: King Abdulaziz City for Science & Technology (KACST), 11442 Riyadh (SA); Cambridge Enterprise Limited, Cambridge, Cambridgeshire CB2 1TN (GB)
(72) Inventor: Ba-abbad, Mazen Abdullah, 11442 Riyadh (SA); Al-Ansari, Hany A., 11421 Riyadh (SA); Al-kudsi, Abdullah M., 11442 Riyadh (SA); Al-Otaibi, Zaid S., 11442 Riyadh (SA)
(74) Representative: Goddar, Heinz J.

(57) **Abstract**

Electric linear generator/motor comprising an elongate stator, an electrical induction coil extending lengthwise within or around the stator, a rotor including or carrying at least one permanent magnet and capable of moving linearly to and fro relative to the stator, and a means for providing connection of the respective ends of the coil with an electrical power storage, electrical power source, electrical device or the like, characterized in that it further comprises a pipe, the stator is designed as a sleeve sitting on the pipe and that the rotor is located in the pipe.

## Description

The present invention relates to an electric linear generator/motor.

Today, there are many electrical power generation systems that convert mechanical and/or thermal energy into electrical energy. However, most of these systems are very complex and require frequent maintenance, which make them expensive.

Accordingly, it is the main object of the present invention to provide a less complex and cheaper way of converting energy into electrical energy in particular from moving or expanding fluids or vice versa.

This object is solved according to the present invention by an electric linear generator comprising an elongate stator, an electrical induction coil extending lengthwise within or around the stator, a rotor including or carrying at least one permanent magnet and capable of moving linearly to and fro relative to the stator, and a means for providing connection of the respective ends of the coil with an electric energy storage, electric energy source, electric device or the like characterized in that it further comprises a pipe, the stator is designed as a sleeve sitting on the pipe and the rotor is located in the pipe.

In the present application the term "rotor" is used for the movable part of the linear generator. It should therefore be understood that the term "rotor" does not relate to a rotating body but to a body moving linearly to and fro.

In general, claim 1 relates to an engine or a machine that can be used as a generator or a motor.

According to a special embodiment of the electric generator/motor the rotor is substantially rod-shaped.

In particular, both ends of the rod can be expanded.

Conveniently, the rotor is electromagnetically suspended in the sleeve.

Preferably, the sleeve includes at least one superconducting magnet or electromagnet preferably with dynamic control or is surrounded by at least one superconducting magnet or electromagnet preferably with dynamic control.

According to a further special embodiment of said generator, at both ends of the pipe a section is located, the inner surface thereof expanding to the respective pipe end.

In particular, the sections can be integrally formed with the pipe or the sections can be removably fixed to the pipe.

Preferably, the inner surface of the sections is conical.

The invention recognizes that by using a special kind of electric linear generator/motor energy conversion, in particular integrated energy conversion, can be simplified and therefore cheaper in production and/or maintenance.

A simple impulse free-piston linear generator/motor can be used to construct integrated energy conversion systems in a much lower cost and simpler way than in the prior art.

In cases where the working fluid is non-corrosive and non-contaminating, for example by way of sections at both ends of the pipe with inner surfaces that expand to the respective pipe end, high speed fluid jets can be generated to move the moving part, i.e. the pipe, of the electrical linear generator. All of these features alone or in combination simplify the design and therefore the cost for the whole system is reduced and the maintenance is simplified.

Further features and advantages of the invention will become clear from the accompanying claims and the following description, in which preferred embodiments of the invention are illustrated in detail with reference to the schematic drawings, wherein
- Figure 1: shows a side view of an electric linear generator/motor according to a first preferred embodiment of the invention;
- Figure 2: shows a side view of an electric linear generator/motor according to a second preferred embodiment of the invention;
- Figure 3: shows the generator/motor of figure 2 with part of the pipe being removed; and
- Figure 4: shows parts of the electric linear generator/motor of figure 2.

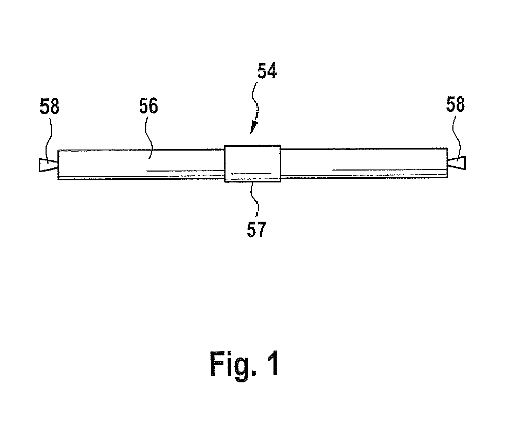

Figure 1 shows an electric linear generator/motor 54 according to a first special embodiment of the invention. It comprises a pipe 56 with a respective section 58 at each end that has conical inner and outer surfaces in such a way (conversion type) to create high speed fluid jet to impact on the rotor (not shown) within the pipe 56. The pipe 64 contains a low pressure fluid or vacuum.

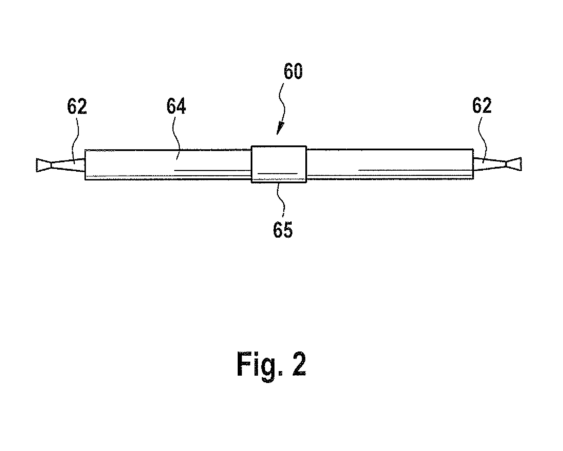

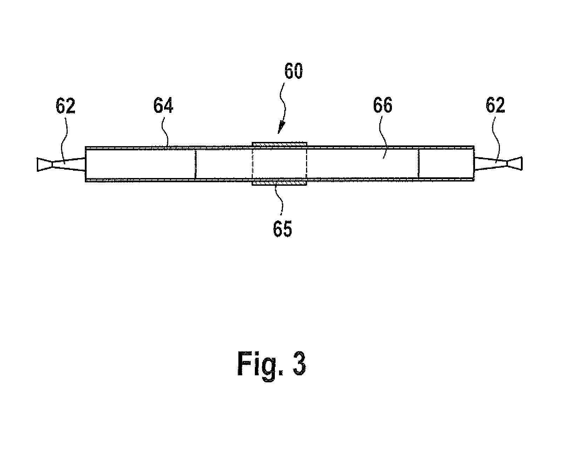

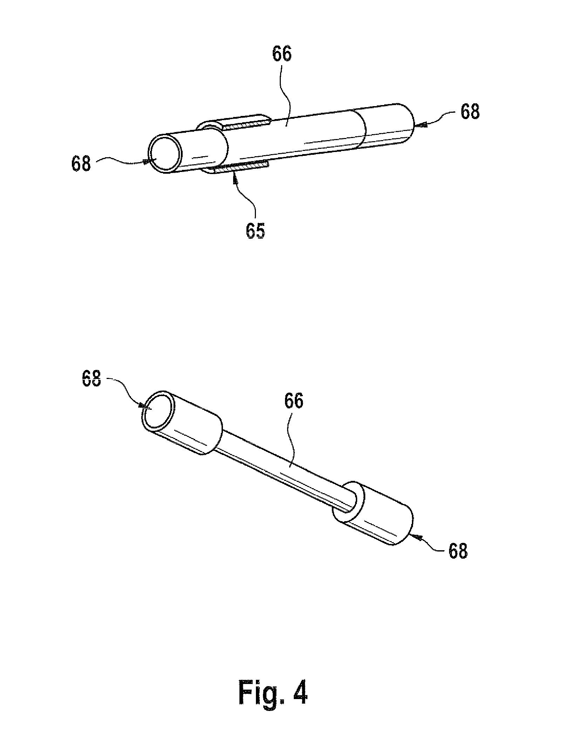

The electric linear generator/motor 60 shown in figures 2 and 3 is different from the electrical linear generator 45 shown in figure 1 in that the outer sections 62 of the pipe 64 in the stator 65 have different inner and outer surfaces. Said sections 62 could be described as of convergent-divergent type. Condensed liquid (not shown) or low pressure gas collection is collected from an outlet (not shown) of the pipe 64. As can be seen from figure 3 as well as figure 4, the outer ends of the rotor 66 (shown in the bottom of figure 4 without permanent magnets) have planar or nearly planar outer sides that are accelerated fluid impact surfaces 68.

The features in the foregoing description, in the claims and/or in the accompanying drawings may, both and in any combination thereof, be material for realizing the invention in diverse forms thereof.

### Reference list

- 54: electric linear generator/motor
- 56: pipe
- 57: stator
- 58: sections
- 60: electric linear generator/motor
- 62: sections
- 64: pipe
- 65: stator
- 66: rotor
- 68: impact surfaces

## Claims

1. Electric linear generator/motor (54; 60) comprising
- an elongate stator (57; 65),
- an electrical induction coil extending lengthwise within or around the stator,
- a rotor (66) including or carrying at least one permanent magnet and capable of moving linearly to and fro relative to the stator, and
- a means for providing connection of the respective ends of the coil with an electrical energy storage, electrical energy source, electric device or the like, **characterized in that**
it further comprises a pipe (56; 64), the stator is designed as a sleeve sitting on the pipe and that the rotor is located in the pipe.

2. Generator/Motor (54; 60) according to claim 1, wherein the rotor (66) is substantially rod-shaped.

3. Generator/Motor (54; 60) according to claim 2, wherein both ends of the rod are expanded.

4. Generator/Motor (54; 60) according to anyone of claims 1 to 3, wherein the rotor (66) is electromagnetically suspended in the sleeve.

5. Generator/Motor according to claim 4, wherein the sleeve includes at least one superconducting magnet or electromagnet preferably with dynamic control or is surrounded by at least one superconducting magnet or electromagnet preferably with dynamic control.

6. Generator/Motor (54; 60) according to anyone of the preceding claims, wherein at both ends of the pipe a section (58; 62) is located, the inner surface thereof expanding to the respective pipe end.

7. Generator/Motor according to claim 6, wherein the sections are integrally formed with the pipe or wherein the sections are removably fixed to the pipe.

8. Generator/Motor (54; 60) according to claim 6 or 7, wherein the inner surface of the sections (58; 62) is conical.
